# DEMANDE DE BREVET EUROPEEN

(11) **EP 1 635 280 A1**
(43) Date de publication de la demande: **15.03.2006**
(21) Numéro de dépôt: 05291839.8
(22) Date de dépôt: 07.09.2005
(51) Int. Cl.: G06K 19/07

(54) **Objet communiquant et procédé de localisation d'un tel objet**

(30) Priorité: 14.09.2004 FR 0409744
(71) Demandeur: FRANCE TELECOM, 75015 Paris (FR)
(72) Inventeur: Remy, Michel, 38400 Saint Martin d'Heres (FR); Airiau, Roland, 38360 Sassenage (FR); Senn, Patrice, 38000 Grenoble (FR)
(74) Mandataire: Joly, Jean-Jacques

(57) **Abrégé**

Objet communicant comportant des moyens de communication sans fil longue portée (10), des moyens actifs de localisation sans fil courte portée (20), et des moyens de contrôle (50) adaptés d'une part à activer et/ou désactiver au moins partiellement l'alimentation (11) des moyens de communication longue portée (10), et d'autre part à désactiver, au moins partiellement, l'alimentation (25) des moyens de localisation courte portée (20).

## Description

La présente invention concerne un objet communicant du type de celui utilisé dans les applications M2M (Machine To Machine) et un procédé de localisation d'un tel objet.

Certains objets communicants sont connus de l'homme du métier comme étant des objets comportant une étiquette électronique (aussi appelée «tag actif» ou « RFID » (Radio Frequency Identification) et une source d'énergie (pile) pour alimenter cette étiquette électronique.

Ils se distinguent ainsi des objets à tags dits passifs qui tirent l'énergie nécessaire à leur fonctionnement du lecteur qui leur est associé.

Plus précisément, les tags actifs comportent des moyens de communication sans fil longue portée (circuit radio), leur permettant de communiquer avec d'autres objets communicants ou avec une base de rattachement et un microcontrôleur notamment adapté à activer ou désactiver la pile d'alimentation de ces moyens de communication sans fil.

Ces moyens de contrôle permettent ainsi d'économiser l'énergie de fonctionnement de l'objet communicant en désactivant, voire en coupant, l'alimentation des fonctions électroniques non utilisées pendant les périodes d'inactivité du système.

Les objets communicants connus à ce jour présentent un inconvénient majeur en ce qu'ils ne peuvent pas être localisés précisément, c'est-à-dire à quelques mètres près.

Ce problème est d'autant plus critique lorsque les moyens de communication sans fil précités ont une portée importante, de l'ordre de quelques centaines de mètres.

L'invention permet de résoudre cet inconvénient. A cet effet, elle concerne un objet communicant comportant :
- des moyens de communication sans fil longue portée ;
- des premiers moyens d'alimentation adaptés à alimenter en énergie ces moyens de communication sans fil ;
- des moyens actifs de localisation sans fil courte portée ;
- des deuxièmes moyens d'alimentation adaptés à alimenter en énergie les moyens de localisation ; et
- des moyens de contrôle adaptés à activer et préférentiellement à désactiver, au moins partiellement, les premiers et deuxièmes moyens d'alimentation.

Ainsi, l'invention consiste à localiser précisément l'objet communicant en utilisant des moyens actifs de localisation sans fil courte portée.

Préférentiellement, les moyens de contrôle des premiers et deuxièmes moyens d'alimentation sont mis en oeuvre par un même microcontrôleur.

Préférentiellement, les moyens de contrôle activent les deuxièmes moyens d'alimentation à un instant déterminé ou après une durée prédéterminée.

Ce mode de réalisation permet avantageusement d'obtenir la localisation de l'objet communicant à des instants choisis.

La position ainsi obtenue peut avantageusement être communiquée à une base de rattachement en utilisant les moyens de communication sans fil longue portée.

Dans un autre mode préféré de réalisation, les moyens de contrôle comportent un capteur qui active les deuxièmes moyens d'alimentation sur détection d'un évènement prédéterminé.

L'objet communicant peut ainsi être localisé dès lors que cet évènement se produit.

Dans une variante préférée de ce mode de réalisation, le capteur est adapté à détecter le déplacement de l'objet communicant, en utilisant une technologie MEMS « Micro Electro Mechanical Systems » du type de celle utilisée dans les détecteurs de choc, les accéléromètres et les magnétomètres.

Dans une autre variante de réalisation de ce mode préféré de réalisation, le capteur est adapté à détecter une variation de température ou de pression.

Dans un mode préféré de réalisation, les moyens de communication sans fil longue portée comportent un moyen de communication radio utilisant une technologie ULP (Ultra Low Power).

Dans un mode préféré de réalisation, les moyens de localisation actifs comportent des moyens de communication sans fil courte distance adaptés à mesurer la puissance d'un signal reçu par l'objet communicant à partir d'au moins trois bornes fixes.

De façon avantageuse, ces moyens de communication sans fil sont constitués par un module de communication conforme à la norme WIFI, ce module étant adapté à mesurer la puissance de trames de synchronisation émises par les bornes.

Dans une variante avantageuse de réalisation, ce module WIFI est configuré pour ne fonctionner qu'en mode réception.

Corrélativement, l'invention vise également un procédé de localisation d'un objet communicant tel que mentionné brièvement ci-dessus, ce procédé comportant :
- une étape de détection d'un événement ;
- une étape d'activation des deuxièmes moyens d'alimentation sur détection de l'événement ; et
- une étape de localisation de l'objet communicant en utilisant les moyens actifs de localisation sans fil.

Les avantages particuliers du procédé de localisation étant identiques à ceux de l'objet communicant mentionné précédemment, ils ne seront pas rappelés ici.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1 représente un objet communicant conforme à l'invention dans un mode préféré de réalisation ; et
- la figure 2 représente les principales étapes d'un procédé de localisation conforme à l'invention dans un mode préféré de réalisation.

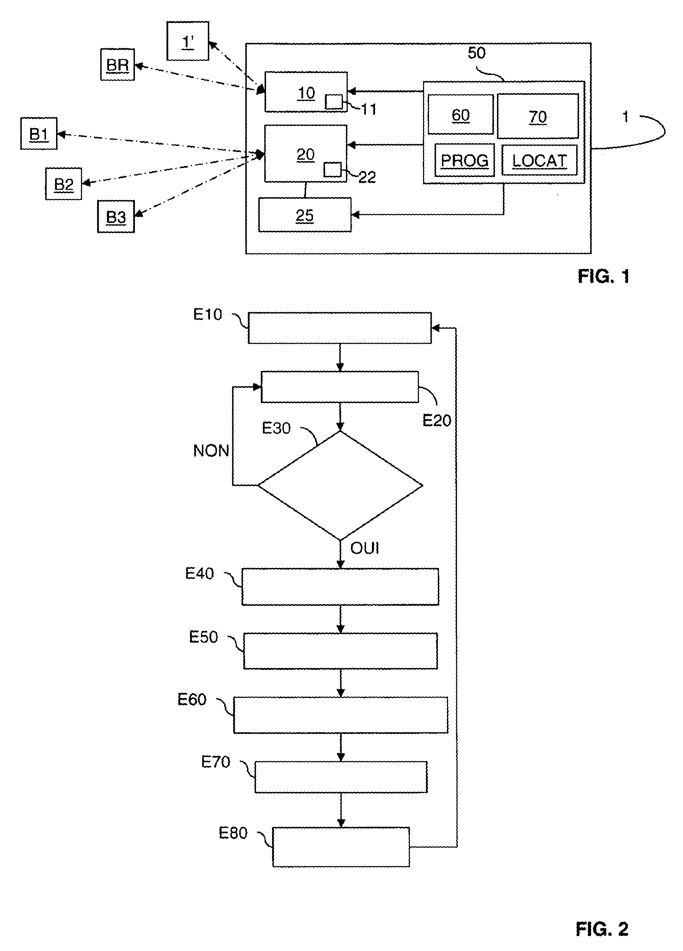

La **figure 1** représente un objet communicant 1 conforme à l'invention.

L'objet communicant 1 comporte des moyens de communication radio 10, longue portée de type ULP (Ultra Low Power), lui permettant de communiquer avec un autre objet communicant 1' ou avec une base de rattachement BR.

De façon connue de l'homme du métier, ces moyens de communication sans fil longue portée 10 sont également appelés « tag actif », « étiquette électronique » ou « RFID (en anglais Radio Frequency Identification) ».

Dans un mode préféré de réalisation, les moyens de communication sans fil actifs longue portée sont constitués par le composant TR 3000 commercialisé par la société RFM.

Ces moyens de communication sans fil actifs longue portée 10 sont alimentés en énergie par des premiers moyens d'alimentation 11.

Dans le mode préféré de réalisation décrit ici, les premiers moyens d'alimentation 11 sont constitués par une pile au lithium connue sous la référence CR2450.

L'objet communicant 1 comporte également des moyens de contrôle 50 adaptés à activer et à désactiver, au moins partiellement, les premiers moyens d'alimentation 11.

Dans le mode de réalisation décrit ici, ces moyens de contrôle 50 sont constitués par le micro-contrôleur MPS 430 commercialisé par la société TEXAS INSTRUMENTS.

Ces moyens de contrôle 50 sont plus particulièrement adaptés à mettre en sommeil, voire à couper l'alimentation de tous les blocs ou fonctions électroniques non utilisés pendant les périodes d'inactivité de l'objet communicant 1.

Dans le mode préféré de réalisation décrit ici, seul un timer 60 et un capteur 70 restent continuellement alimentés par les premiers moyens d'alimentation 11.

Conformément à l'invention, l'objet communicant 1 comporte des moyens de localisation sans fil actifs courte portée 20, alimentés en énergie par des deuxièmes moyens d'alimentation 25 et permettant de localiser précisément l'objet communicant 1.

Dans le mode préféré de réalisation décrit, les moyens actifs de localisation sans fil sont constitués par le circuit PHILIPS BGW200 programmé uniquement en réception.

Ce circuit permet ainsi de localiser l'objet communicant 1 à partir de la mesure de la puissance d'un signal reçu à partir de trois bornes B1, B2, B3 fixes qui émettent régulièrement (par exemple toutes les 100 mms) une trame de signalisation, cette trame comportant entre autres l'adresse MAC de la borne qui l'a émise.

Conformément à l'invention, les moyens de contrôle 50 sont adaptés à activer les deuxièmes moyens d'alimentation 25.

Dans le mode de réalisation préféré décrit ici, les moyens de contrôle 50 sont également adaptés à désactiver les deuxièmes moyens d'alimentation 25.

Dans l'exemple de la figure 1, les deuxièmes moyens d'alimentation 25 sont extérieurs aux moyens actifs de localisation sans fil 20.

Dans une variante, les deuxièmes moyens d'alimentation 25 sont intégrés aux moyens de localisation sans fil 20.

Dans une première variante de réalisation, les moyens de contrôle 50 sont adaptés, en coopération avec le timer 60, à activer les deuxièmes moyens d'alimentation 25 à un instant déterminé ou après une durée prédéterminée.

Il est alors possible d'obtenir la localisation de l'objet communicant 1, à une heure donnée ou selon des intervalles de temps choisis.

Ces données de localisation peuvent ensuite être transmises à la borne de rattachement BR en utilisant les moyens de communication sans fil actifs longue portée 10.

Dans une autre variante de réalisation, le capteur 70 active les deuxièmes moyens d'alimentation 25 sur la détection d'évènements prédéterminés.

Dans le mode préféré de réalisation décrit ici, le capteur 70 utilise une technologie MEMS et permet de détecter le déplacement de l'objet communicant 1.

Un tel détecteur MEMS peut par exemple être constitué par le circuit TMA1-02-CSP de la société TRONIC'S MICROSYSTEMS.

Dans un autre mode de réalisation, le capteur 70 est adapté à activer les deuxièmes moyens d'alimentation 25 sur détection d'une variation de température ou de pression.

Lorsque les moyens de contrôle 50 activent les deuxièmes moyens d'alimentation 25 (à un instant déterminé, après une durée prédéterminée ou en réponse au capteur 70), le module de communication sans fil 22 des moyens actifs de localisation 20 mesure la puissance de réception des trames de signalisation émises par les trois bornes B1, B2, B3.

L'objet communicant 1 comporte également une table de localisation LOCAT permettant de localiser l'objet communicant 1 à partir de ces trois mesures de puissance.

L'objet communicant 1 comporte également des moyens de mise en oeuvre d'un programme informatique PROG adapté à mette en oeuvre un procédé de localisation conforme à l'invention, tel que décrit ci-dessous en référence à la figure 2.

La **figure 2** représente les principales étapes d'un procédé de localisation conforme à l'invention dans un mode préféré de réalisation, ce procédé étant mis en oeuvre par le programme informatique PROG de l'objet décrit précédemment.

Ce procédé comporte une première étape E10 au cours de laquelle on initialise le timer 60 des moyens de contrôle 50.

L'étape E10 d'initialisation est suivie par une étape E20 au cours de laquelle les moyens de contrôle 50 désactivent les deuxièmes moyens d'alimentation 25.

Ainsi, à l'issue de cette étape E20, les moyens actifs de localisation sans fil à courte portée 20 sont inactifs.

L'étape de mise en veille E20 est suivie par un test E30 au cours duquel on vérifie si le timer 60 initialisé à l'étape E10 est expiré ou si le capteur 70 a détecté un évènement (déplacement, variation de température ou de pression).

Si tel n'est pas le cas, le résultat du test E30 est négatif et le programme PROG retourne à l'étape E20 précédente.

Lorsque le timer 60 a expiré ou qu'un évènement prédéterminé s'est produit, le résultat du test E30 est positif.

Ce test est alors suivi par une étape E40 au cours de laquelle les moyens de contrôle 50 activent les deuxièmes moyens d'alimentation 25.

Cette étape E40 d'activation est suivie par une étape E50 au cours de laquelle le module de communication sans fil 22 des moyens actifs de localisation 20 mesure la puissance des trames de synchronisation reçues des bornes B1, B2, B3 conformément au protocole de communication WIFI.

L'étape E50 de mesure de puissance est suivie par une étape E60 au cours de laquelle les moyens de contrôle 50 désactivent les deuxièmes moyens d'alimentation 25.

L'étape E60 de désactivation est suivie par une étape E70 au cours de laquelle le programme informatique PROG localise la position de l'objet communicant 1 par lecture de la table de localisation LOCAT indexée par les trois puissances mesurées.

L'étape E70 de localisation est suivie par une étape E80 au cours de laquelle la position ainsi obtenue est transférée à la base de rattachement BR ou à un autre objet communicant 1' par les moyens de communication sans fil longue portée 10.

En variante, les moyens de communication sans fil actifs longue portée peuvent être des moyens de communication conformes à un protocole de type GSM, GPRS ou UMTS.

En variante également, les moyens actifs de localisation sans fil courte portée peuvent être conformes à la technologie Bluetooth.

Dans la représentation de la figure 1, les premiers 11 et deuxièmes 25 moyens d'alimentation apparaissent comme des éléments distincts.

L'homme du métier comprendra que ces éléments peuvent en effet être constitués par deux éléments distincts comme représenté à la figure 1 mais aussi par une seule et même alimentation adaptée à alimenter indépendamment ou simultanément les moyens de connexion sans fil longue portée 10 et les moyens actifs de localisation sans fil 20 en fonction des commandes d'activation/désactivation reçues des moyens de contrôle 50.

## Revendications

1. Objet communicant comportant :
- des moyens de communication sans fil longue portée (10) ;
- des premiers moyens d'alimentation (11) adaptés à alimenter en énergie lesdits moyens de communication (10) ; et
l'objet communicant (1) étant **caractérisé en ce qu'**il comporte en outre :
- des moyens actifs de localisation sans fil courte portée (20) ;
- des deuxièmes moyens d'alimentation (25) adaptés à alimenter en énergie lesdits moyens de localisation actifs (20) ; et
- des moyens de contrôle (50) adaptés à activer et préférentiellement à désactiver, au moins partiellement, lesdits premiers (11) et deuxièmes (25) moyens d'alimentation.

2. Objet communiquant selon la revendication 1, **caractérisé en** lesdits moyens de contrôle (50) des premiers (11) et deuxièmes (25) moyens d'alimentation sont mis en oeuvre par un même microcontrôleur (50).

3. Objet communicant selon la revendication 1 ou 2, **caractérisé en ce que** lesdits moyens de contrôle (50) sont adaptés à activer les deuxièmes moyens d'alimentation (25) à un instant déterminé ou après une durée prédéterminée.

4. Objet communicant selon l'une quelconque des revendications 1 à 3, **caractérisé en ce que** lesdits moyens de contrôle (50) comportent un capteur (70) adapté à activer les deuxièmes moyens d'alimentation (25) sur détection d'un événement prédéterminé.

5. Objet communicant selon la revendication 4, **caractérisé en ce que** ledit capteur (70) est adapté à activer les deuxièmes moyens d'alimentation (25) sur détection d'un déplacement dudit objet communicant (1).

6. Objet communicant selon la revendication 5, **caractérisé en ce que** ledit capteur (70) utilise une technologie MEMS.

7. Objet communicant selon la revendication 4, **caractérisé en ce que** en ledit capteur (70) est adapté à activer les deuxièmes moyens d'alimentation (25) sur détection d'une variation d'une température ou d'une pression.

8. Objet communicant selon l'une quelconque des revendications 1 à 7, **caractérisé en ce que** les moyens de communication sans fil longue portée (10) comportent un module de communication radio ULP avec une base de rattachement (BR) ou avec un autre objet communicant (1').

9. Objet communicant selon l'une quelconque des revendications 1 à 8, **caractérisé en ce que** les moyens actifs de localisation (20) comportent des moyens de communication adaptés à mesurer la puissance d'un signal reçu à partir d'au moins trois bornes fixes (B1, B2, B3).

10. Objet communicant selon la revendication 9, **caractérisé en ce que** les moyens de localisation (20) comportent un module de communication sans fil courte distance (22) adapté à mesurer la puissance de trames de synchronisation émises par lesdites bornes, conformément au protocole de communication Wifi.

11. Procédé de localisation d'un objet communicant (1) selon la revendication 1, **caractérisé en ce qu'**il comporte :
- une étape (E30) de détection d'un événement ;
- une étape (E40) d'activation desdits deuxièmes moyens d'alimentation (25) sur détection dudit événement ; et
- une étape (E70) de localisation dudit objet communicant (1) en utilisant lesdits moyens actifs de localisation sans fil (20).

12. Procédé de localisation selon la revendication 11, **caractérisé en ce que**, au cours de ladite étape (E30) de détection, ledit événement correspond à :
- l'avènement d'un instant prédéterminé ; ou à
- l'expiration d'une durée prédéterminée ; ou à
- un déplacement dudit objet communicant (1) ; ou à
- une variation d'une température ou d'une pression.

13. Procédé de localisation selon la revendication 11 ou 12, **caractérisé en ce que**, pour effectuer ladite localisation (E70), lesdits moyens de localisation sans fil (20) mesurent la puissance d'un signal reçu à partir d'au moins trois bornes fixes (B1, B2, B3).

14. Procédé de localisation selon la revendication 13, **caractérisé en ce que**, pour effectuer ladite localisation (E70), lesdits moyens de localisation sans fil (20) mesurent la puissance de trames de synchronisation émises par lesdites bornes, conformément au protocole de communication Wifi.
